# EUROPÄISCHE PATENTSCHRIFT

(11) **EP 2 238 008 B1**
(45) Veröffentlichungstag und Bekanntmachung des Hinweises auf die Patenterteilung: **15.11.2017**
(21) Anmeldenummer: 08866769.6
(22) Anmeldetag: 15.12.2008
(51) Int. Cl.: B60W 50/02, B62D 15/02, B60W 10/06, B60W 10/20, B60W 10/18, B60W 30/16, B60W 30/12

(54) **VERFAHREN UND VORRICHTUNG ZUR STEUERUNG UND/ODER REGELUNG EINES KRAFTFAHRZEUGES**
METHOD AND DEVICE FOR CONTROLLING AND/OR REGULATING A MOTOR VEHICLE
PROCÉDÉ ET DISPOSITIF DE COMMANDE ET/OU DE RÉGULATION D'UN VÉHICULE AUTOMOBILE

(30) Priorität: 27.12.2007 DE 102007062698
(43) Veröffentlichungstag der Anmeldung: 13.10.2010
(73) Patentinhaber: Volkswagen Aktiengesellschaft, 38440 Wolfsburg (DE)
(72) Erfinder: BARTELS, Arne, 38448 Wolfsburg (DE)
(86) Internationale Anmeldenummer: PCT/EP2008/010632
(87) Internationale Veröffentlichungsnummer: WO 2009/083120

(56) Entgegenhaltungen:
- EP-A- 1 493 631
- DE-A1- 10 019 191
- DE-A1- 19 821 163
- DE-A1-102005 022 680
- DE-A1-102006 004 772
- DE-A1-102007 062 698

## Beschreibung

Die Erfindung betrifft ein Verfahren und eine Vorrichtung zur Steuerung und/oder Regelung eines Kraftfahrzeuges.

Aus der DE 10 2005 051 910 A1 ist ein Verfahren zum Steuern eines Fahrerassistenzsystems für ein Straßenfahrzeug bekannt, bei dem Umgebungsinformationen über eine Umgebung des Fahrzeugs erfasst werden und eine Bewegungsrichtung und/oder eine Geschwindigkeit des Fahrzeugs abhängig von den Umgebungsinformationen beeinflusst werden, wobei während eines Betriebes des Fahrzeuges Hilfsinformationen ermittelt werden, mittels derer durch eine Zentraleinheit erkannt wird, ob das Fahrerassistenzsystem in einem momentanen und/oder einem für die Zukunft zu erwartenden Zustand der Umgebung und/oder Betriebszustandes des Fahrzeuges zuverlässig bzw. zweckmäßig betrieben werden kann, wobei die Zentraleinheit das Fahrerassistenzsystem automatisch deaktiviert oder in einen vorbestimmten Betriebsmodus umschaltet und/oder eine Warnung an den Fahrer ausgibt, wenn das Fahrerassistenzsystem nicht zuverlässig bzw. zweckmäßig betrieben werden kann. Vorzugsweise ist der vorbestimmte Betriebsmodus ein Betriebsmodus gleicher Funktionalität wie der zuletzt aktivierte Betriebsmodus, wobei dieser nunmehr eine veränderte Regelempfindlichkeit aufweist.

Aus der DE 10 2005 013 448 A1 ist eine Sicherheitsvorrichtung für Kraftfahrzeuge bekannt, mit einem Sensorsystem zur Erfassung des Verkehrsumfeldes, einer Prädiktionseinrichtung zur Erkennung einer Kollisionsgefahr und einem Aktorsystem zur Auslösung einer Reaktion in Abhängigkeit von der Kollisionsgefahr, wobei die Sicherheitseinrichtung mit einer Selbstkontrolleinrichtung ausgebildet ist, die dazu ausgebildet ist, eine Vorhersage der Prädiktionseinrichtung mit dem tatsächlichen Geschehen zu vergleichen und in Abhängigkeit von einer festgestellten Diskrepanz zumindest eine Teil-Deaktivierung des Aktorsystems zu veranlassen.

Aus der DE 10 2005 057 251 A1 ist ein Verfahren zum Betrieb einer Fahrspurassistenzvorrichtung zur automatischen Spurhaltung oder Spurverlasswarnung bei einem Fahrzeug bekannt, wobei mindestens eine für den zuverlässigen Betrieb der Fahrerassistenzvorrichtung maßgebliche Randbedingung erfasst wird, wobei die erfassten Randbedingungen darauf untersucht werden, ob diese einen zugeordneten Grenzwert über- oder unterschreiten, wobei das Fahrerassistenzsystem automatisch bei Über- oder Unterschreiten eines oder mehrerer zugeordneter Grenzwerte durch mindestens eine erfasste Randbedingung abgeschaltet wird. Dabei ist vorgesehen, dass mindestens eine für die Abschaltung der Fahrerassistenzvorrichtung maßgebliche Randbedingung die Funktionsfähigkeit eines oder mehrerer Sensoren umfasst. Der Begriff Funktionsfähigkeit umfasst dabei sowohl die grundsätzliche Aktivität des Sensors als auch die Qualität und Verwertbarkeit dessen Ausgangssignals.

Aus der DE 101 49 768 A1 ist ein Verfahren zum Bestimmen der Sichtweite einer optoelektronischen Erfassungseinrichtung bekannt, die zumindest einen Sensor zur Aussendung von insbesondere gepulster elektromagnetischer Strahlung in einem Überwachungsbereich und zum Empfang von aus dem Überwachungsbereich reflektierter Strahlung sowie eine Auswerteeinrichtung zur Auswertung der reflektierten Strahlung umfasst, bei dem während des Betriebes des Sensors das Vorliegen wenigstens einer im Sichtbereich des Sensors liegenden, die Sichtweite zumindest bereichsweise beeinträchtigenden Störung anhand wenigstens einer charakteristischen Störungseigenschaft erkannt wird, die mittels des Sensors durch Auswerten der reflektierten Strahlung identifizierbar ist. Dabei wird aus reflektierter Strahlung, die zumindest die aus dem Störbereich stammende Störstrahlung umfasst, die Stärke der Störung ermittelt und aus der Störungsstärke die momentane Sichtweite des Sensors bestimmt. Daher ist es möglich, auf die die Sichtweite beeinträchtigenden Störungen differenziert zu reagieren. Insbesondere ist es nicht erforderlich, den Erfassungsbetrieb aus Sicherheitsgründen und aufgrund der Befürchtung völlig einzustellen, dass auf die Messungen wegen der Sichtweitenreduzierung kein Verlass mehr sei oder die reduzierte Sichtweite für eine brauchbare Überwachung nicht mehr ausreiche. Vielmehr kann die tatsächliche Reichweite des Sensors z.B. bei Regen ermittelt und beispielsweise die Geschwindigkeit eines mit der Erfassungseinrichtung versehenen Fahrzeuges so weit verringert werden, dass die reduzierte Sensorsichtweite einem ausreichend sicheren Erfassungsbetrieb genügt.

Fahrerassistenzsysteme zur Steuerung und/oder Regelung eines Kraftfahrzeuges, wie beispielsweise zur automatischen Spurhaltung, zeichnen sich dadurch aus, dass der Fahrer weiter aktiv Lenkmomente aufbringt, wobei das Fahrerassistenzsystem unterstützende Lenkmomente aufbringt.

Weiter sind Systeme zum automatischen Fahren bekannt, bei denen der Fahrer selber keine Lenkmomente mehr aufbringen muss, d.h. das Fahrzeug übernimmt selbständig die komplette Längs- und Querführung des Fahrzeugs, wobei jedoch der Fahrer gegebenenfalls die Vorrichtung überwachen muss. Der Patentinhaberin ist beispielsweise bekannt, dass der Fahrer die Hände auf das Lenkrad legen muss (ohne Lenkmomente zu generieren), um bei Ausfall und Fehlverhalten korrigierend eingreifen zu können. Ein wesentlicher Bestandteil von Systemen zum automatischen Fahren sind Sensoren zur Umfelderfassung wie beispielsweise Radarsensoren, Lasersensoren, Kamerasensoren und Ultraschallsensoren. Des Weiteren umfassen derartige Systeme üblicherweise Positionsbestimmungseinrichtungen, die beispielsweise eine satellitengestützte Navigation in Verbindung mit einer digitalen Karte erlauben, wie beispielsweise GPS, GLONASS oder zukünftig Galileo. Neben den üblichen Informationen von digitalen Navigationskarten kann beispielsweise auf der Karte die Position von Verkehrsschildern, Ampeln oder die zentimetergenaue Position der Fahrspuren angegeben sein. Für die Positionsangabe von Verkehrsschildern oder Ampeln ist beispielsweise eine Genauigkeit im Bereich von wenigen Metern ausreichend. Soll mittels der Karte und Ortung geprüft werden, ob das eigene Fahrzeug in der Fahrspurmitte fährt, so ist eine Genauigkeit der Ortungsdaten von wenigen Zentimetern erforderlich. Daher werden bei Systemen zum automatischen Fahren hohe Anforderungen an die Verfügbarkeit, Genauigkeit und Integrität der Sensordaten gestellt.

Aus der DE 198 21 163 A1 ist ein Verfahren zum Betreiben eines Fahrer-Assistenzsystems eines Kraftfahrzeuges bekannt, umfassend folgende Schritte:
a) Erfassen von vorbestimmten, momentanen Umgebungsparametern einer augenblicklichen Verkehrssituation,
b) Vergleichen der erfassten momentanen Umgebungsparameter mit gespeicherten, für das Fahrer-Assistenzsystem zulässigen Umgebungsparametern und
c) Deaktivieren des Fahrer-Assistenzsystems, wenn sich momentane Umgebungsparameter außerhalb für das Fahrer-Assistenzsystem zulässigen vorbestimmten Umgebungsparameter befinden, oder Aktivieren des Fahrer-Assistenzsystems, wenn sich momentane Umgebungsparameter innerhalb der für das Fahrer-Assistenzsystem vorbestimmten zulässigen Umgebungsparameter befinden.
In der DE 198 21 163 A ist das Fahrer-Assistenzsystem ein autonomes, intelligentes Fahrzeugführungssystem (AICC), eine Vorrichtung zur spurhaltungsgeregelten Lenkung eines Kraftfahrzeugs, ein Kollisionswarnsystem, eine Vorrichtung zum vollautomatischen Führen eines Kraftfahrzeugs, ein Sicherheits-Management-System zum Schutz von Fahrzeuginsassen, ein Airbag-Auslösegerät, ein Abstandswarnsystem, ein Tempomat, ein Motor-Management-System für eine möglichst gleichmäßige Einhaltung einer vorgewählten Reisegeschwindigkeit, eine Anti-Schlupf-Regelung (ASR), ein Antiblockiersystem (ABS), ein automatisches Notrufsystem, eine Einparkhilfe, eine Einrichtung zum Regeln einer Geschwindigkeit eines Fahrzeugs und/oder eines Abstandes des Kraftfahrzeugs zu einem vorausfahrenden Fahrzeug oder zu einem in Fahrtrichtung befindlichen Gegenstand, ein autonomes Fahrzeugführungssystem, eine Vorrichtung zum Vermeiden und/oder Minimieren von Konfliktsituationen im Straßenverkehr und/oder eine Vorrichtung zur Leuchtweiteneinstellung von Scheinwerfern eines Kraftfahrzeugs.

Aus der DE 10 2006 004 772 A1 ist ein Fahrerassistenzsystem mit zumindest Fahrerassistenzfunktionen wie Lane Departure Warning oder Lane Keeping Support bekannt, wobei die Aktivierung bzw. Deaktivierung der Fahrerassistenzfunktionen von einem Vertrauensmaß abhängig ist.

Der Erfindung liegt das technische Problem zugrunde, ein Verfahren und eine Vorrichtung zur Steuerung und/oder Regelung eines Kraftfahrzeuges zu schaffen, wo hoher Komfort mit hoher Verfügbarkeit kombiniert wird.

Die Lösung des technischen Problems ergibt sich durch die Gegenstände mit den Merkmalen der Patentansprüche 1 und 3. Weitere vorteilhafte Ausgestaltungen der Erfindung ergeben sich aus den Unteransprüchen.

Hierzu umfasst die Vorrichtung zur Steuerung und/oder Regelung eines Kraftfahrzeuges mindestens ein Fahrerassistenzsystem zur Unterstützung des Kraftfahrzeugführers und mindestens ein System zum automatischen Fahren, wobei die Systeme auf die Daten mindestens eines gemeinsamen Sensors zugreifen, wobei in Abhängigkeit von der Fahraufgabe und dem Umfeld und der Qualität der Sensordaten automatisch von einem System auf das andere System umgeschaltet wird oder der Fahrer über die Möglichkeit des Wechsels informiert wird. Dabei wird unter einem System zum automatischen Fahren ein System verstanden, bei dem der Fahrer selbst keine Lenkmomente mehr aufbringen muss und das System selbstständig die komplette Längs- und Querführung des Fahrzeugs übernimmt, wobei bei einem überwachten System zum automatischen Fahren der Fahrer die Hände auf das Lenkrad legen muss, ohne Lenkmomente zu generieren. Durch den Übergang vom automatischen System (Pilot) zum Fahrerassistenzsystem kann die Sensor-Plattform im Fahrzeug weiter genutzt werden, auch wenn eine Änderung der Sensordaten-Qualität, des Umfeldes oder der Fahraufgabe ein Abschalten des Piloten erfordern. Dabei können zusätzlich die Wechsel auch von einem automatischen System zu einem anderen automatischen System erfolgen bzw. von einem Fahrerassistenzsystem zu einem anderen Fahrerassistenzsystem. Dabei ist die Fahraufgabe von der Fahrzeuggeschwindigkeit und/oder dem Abstand zu einem vorausfahrenden Kraftfahrzeug abhängig.

Weiter ist das System zum automatischen Fahren als überwachter und/oder unüberwachter Traffic Pilot und/oder als Stau Pilot und/oder als Kolonnen Pilot ausgebildet. Unter einem Traffic Pilot wird ein System zum automatischen Fahren (auch automatisches System genannt) mit integrierter Längs- und Querführung verstanden. Eine besondere Ausgestaltung des Traffic Piloten ist der Stau Pilot. Dieser führt bei niedrigen Geschwindigkeiten im Stau eine automatische Staufolgefahrt durch, wobei der Fahrer die Hände nicht am Lenkrad haben muss. Löst sich der Stau auf und überschreitet das eigene Fahrzeug eine voreingestellte Geschwindigkeitsschwelle, dann wird der Fahrer zur Übernahme aufgefordert, wenn nicht andere automatische Systeme übernehmen können. Eine weitere spezielle Ausprägung ist der Kolonnen Pilot. Dieser funktioniert wie der Stau Pilot, wobei die Geschwindigkeitsschwelle angehoben ist.

In einer weiteren bevorzugten Ausführungsform wird das Umfeld mindestens in Stadt und Autobahn unterteilt. Weitere mögliche Unterteilungen sind Baustelle und/oder Landstraße.

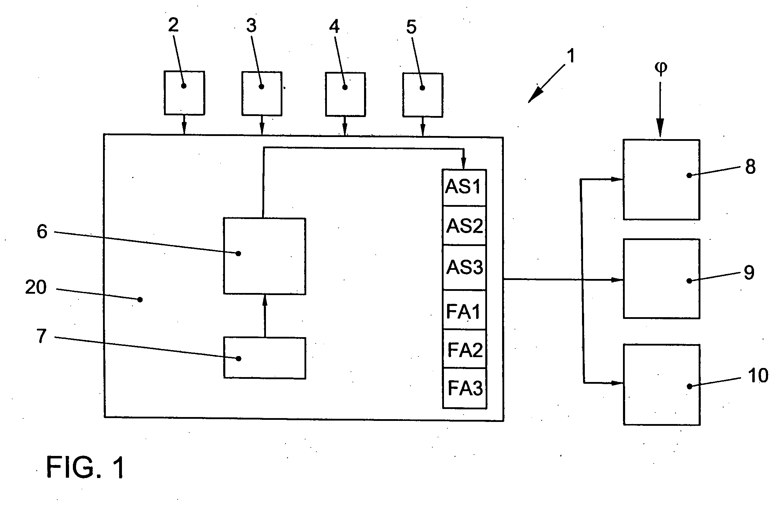

Die Erfindung wird nachfolgend anhand eines bevorzugten Ausführungsbeispieles näher erläutert. Die einzige Figur zeigt ein schematisches Blockschaltbild einer Vorrichtung zur Steuerung und/oder Regelung eines Kraftfahrzeuges.

Die Vorrichtung 1 zur Steuerung und/oder Regelung eines Kraftfahrzeuges umfasst mindestens eine Einrichtung 2 zur Erfassung der Fahrzeuggeschwindigkeit, mindestens eine Abstandssensorik 3, mindestens eine Einrichtung 4 zur Positionsbestimmung und mindestens eine Kamera 5. Weiter umfasst die Vorrichtung 1 eine Auswerte- und Steuereinheit 20 mit einem Mikroprozessor 6, der auf die Daten einer digitalen Straßenkarte 7 zugreifen kann. Mittels des Mikroprozessors 6 kann ein Fahrerassistenzsystem FA 1-3 oder ein System AS 1-3 zum automatischen Fahren ausgewählt werden. Das ausgewählte System FA 1-3, AS 1-3 steuert dann eine Lenkaktuatorik 8, eine Bremsanlage 9 und/oder ein Motormanagement 10 an. Dabei ist bezüglich der Lenkaktuatorik 8 als weitere Eingabe der Lenkwinkel dargestellt, der bei dem Fahrerassistenzsystem FA 1-3 durch den Fahrer über das Lenkrad eingegeben werden kann. Gleiches gilt auch für die Bremsanlage 9 bzw. das Motormanagement 10 entsprechend, wobei dann die Eingaben über das Bremspedal bzw. das Gaspedal erfolgen.

Der Mikroprozessor 6 wählt je nach ermittelter Qualität der Sensordaten und/oder der Fahraufgabe und/oder des ermittelten Umfeldes aus, ob eine Umschaltung von einem automatischen System AS 1-3 auf ein anderes automatisches System oder ein Fahrerassistenzsystem FA 1-3 erfolgen muss oder kann.

Dies soll nun anhand einiger Beispiele näher erläutert werden.

Die Qualität von Sensordaten wird bestimmt durch deren Verfügbarkeit, Genauigkeit und Integrität. Bedingt durch Umwelteinflüsse kann die Qualität der Sensordaten sich verschlechtern. Dies kann zur Folge haben, dass Funktionen nicht mehr aufrechterhalten werden können. Als Beispiel seien witterungsbedingte Einflüsse wie Regen und Nebel auf die Sensorsicht von Kamera 5, Laser oder Radar als Abstandssensorik 3 genannt oder aber der Abriss der Ortungsdaten beim Unterqueren von Brücken bzw. Schilderbrücken oder bei Tunnelfahrten der Einrichtung 4, die beispielsweise als satellitengestütztes Navigationssystem ausgebildet ist. Dieses kann beispielsweise durch ein Trägheitsnavigationssystem unterstützt werden. Eine weitere Ursache für eine weniger genaue Ortung sind beispielsweise zu wenige sichtbare Satelliten oder ein notwendiger Einschwingvorgang nach einem Abriss der Ortung.

Als konkretes Beispiel sei der Übergang vom unüberwachten Traffic Piloten als erstes automatisches System AS 1 zum überwachten Traffic Piloten als zweites automatisches System AS 2 beim Abriss der Ortungsdaten genannt: der unüberwachte Traffic Pilot benötigt eine redundante Fahrspurinformation. Diese erhält er z.B. von der Kamera 5 einerseits und der digitalen Karte 7 mit Fahrspurinformationen in Verbindung mit einer hochpräzisen Ortung andererseits. Reißt die Ortung ab, so kann die Fahrspurinformation nur noch von der Kamera 5 ermittelt werden. Dies ist für den unüberwachten Traffic Piloten nicht ausreichend. Daher wird der Fahrer aufgefordert, die Hände wieder an das Lenkrad zu nehmen, und es erfolgt ein Wechsel vom unüberwachten Traffic Piloten zum überwachten Traffic Piloten. Anstelle der Ortungsarten und einer Kamera kann auch vorgesehen sein, dass beispielsweise zwei Kameras die Daten liefern, wobei dann bei Ausfall einer Kamera ein Umschalten von einem automatischen System auf ein überwachtes automatisches System oder ein Fahrerassistenzsystem erfolgt.

Als weiteres konkretes Beispiel sei der Übergang vom Traffic Piloten zum Fahrerassistenzsystem FA 1-3 bei Verschlechterung der Genauigkeit von Ortungsdaten genannt: Für eine exakte Spurführung benötigt der Traffic Pilot eine Genauigkeit der Ortung im Zentimeterbereich. Kann die Ortung nur Positionsdaten mit einer Genauigkeit im Meterbereich liefern, so fordert das System den Fahrer zur Übernahme auf. Dieser legt die Hände wieder an das Lenkrad und wird dann von Assistenz-Systemen unterstützt, welche sich u.a. auf die für sie relevanten Ortungsdaten stützen, wie beispielsweise ACC (Adaptive Cruise Control), Kurvenlicht oder Berglicht. Es erfolgt somit ein Übergang vom automatischen zum assistierten Fahren.

Als weiteres konkretes Beispiel sei der Übergang vom Traffic Piloten hin zum ACC-System bei witterungsbedingter schlechter Kamerasicht genannt. Erhält der Traffic Pilot keine Fahrspurdaten in ausreichender Qualität, so wird die Querführungs-Unterstützung komplett ausgeschaltet. Der Fahrer wird über die ACC-Funktionalität nur bei der Längsführung unterstützt.

Eine Variante des obigen Beispiels ist es, die Querführung zwar dem Fahrer zu überlassen, diesen aber bei der Fahraufgabe "Querführung" durch Warnhinweise oder Lenkmomente zu unterstützen, z.B. um genau in der Fahrspur zu fahren. D.h. es erfolgt ein Umschalten von Traffic Pilot hin zu ACC und Lane Departure Warning bzw. Heading Control mit aktiven Lenkmomenten als Fahrerassistenzsystem FA 1-3.

Fahraufgabe ist z.B. die freie Fahrt oder die Folgefahrt bei niedrigen oder hohen Geschwindigkeiten. Aus einer Änderung der Fahraufgabe leitet sich in der Regel auch eine Änderung der Anforderungen an die Sensorik ab. Der Abstand zum vorausfahrenden Fahrzeug ist z.B. bei niedrigen Geschwindigkeiten, wie sie im Stau vorliegen, deutlich kleiner als bei einer Folgefahrt bei hohen Geschwindigkeiten. Die Sensorreichweite für eine Folgefahrt bei hohen Geschwindigkeiten muss somit größer sein als bei einer Staufolgefahrt.

Als konkretes Beispiel sei der Übergang vom Staupilot zum überwachten Traffic Piloten beim Auflösen des Staus genannt. Beim Auflösen des Staus erfolgt meist weiterhin eine Folgefahrt, jedoch bei höheren Geschwindigkeiten. Wird die Geschwindigkeitsschwelle des Staupiloten überschritten, so fordert das System den Fahrer zur Übernahme auf. Dieser legt die Hände zur Überwachung wieder an das Lenkrad, wobei dann der Traffic Pilot die Längs- und Querführung übernimmt. Es erfolgt somit ein Übergang von einem automatischen System zu einem anderen automatischen System.
Als weiteres konkretes Beispiel sei der Übergang vom Kolonnen Piloten zum Traffic Piloten bei Auflösung der Kolonne genannt. Bei Auflösung der Kolonne erfolgt meist ein Übergang von der Folgefahrt in die freie Fahrt, z.B. indem die vorausfahrenden Fahrzeuge die eigene Fahrstrecke verlassen oder stark beschleunigen. Hat der Kolonnen Pilot kein vorausfahrendes Fahrzeug mehr, dem er folgen kann, so fordert das System den Fahrer zur Übernahme auf. Dieser legt die Hände wieder zur Überwachung an das Lenkrad, wobei dann der Traffic Pilot die Längsund Querführung übernimmt. Es erfolgt somit wieder ein Übergang von einem automatischen System zu einem anderen automatischen System.

Ist hingegen die Sensorqualität nicht ausreichend oder ein überwachter oder unüberwachter Traffic Pilot gar nicht vorhanden, so wird auf ein Fahrerassistenzsystem umgeschaltet. Hierzu wird der Fahrer aufgefordert, das Lenkrad zu übernehmen. Im Gegensatz zum überwachten Traffic Piloten gibt dann der Fahrer wieder Lenkmomente über das Lenkrad vor. Ein solches Fahrerassistenzsystem kann dann beispielsweise ein Spurhalteassistenzsystem mit Eingriff in die Querführung (Heading Control) sein.

Umgebung bzw. Umfeld ist z.B. Autobahn, Baustelle, Stadt oder Landstraße. Aus einer Änderung der Umgebung leitet sich in der Regel auch eine Änderung der Anforderungen an die Sensorik ab. Beim Übergang von der Autobahn in den städtischen Verkehr müssen z.B. Ampeln erfasst werden. Beim Übergang von der Autobahn mit breiten Fahrspuren auf eine Baustelle mit sehr schmalen Fahrspuren muss die Position des eigenen Fahrzeugs in der Fahrspur genauer und zuverlässiger erfasst werden.

Als konkretes Beispiel sei der Übergang vom Traffic Piloten zu einem Fahrerassistenzsystem zur Traktionshilfe beim Übergang von der Autobahn in die Stadt genannt. Anders als in der Stadt gibt es auf der Autobahn keine Ampeln. Ist der Traffic Pilot nicht mit einem System zur Erkennung von Ampeln bzw. Ampelphasen ausgestattet, so fordert er den Fahrer beim Verlassen der Autobahn dazu auf, das Lenkrad zu übernehmen. Der Fahrer wird dann durch das Fahrerassistenzsystem bei der Längs- und Querführung unterstützt. Das Verlassen der Autobahn kann anhand von Navigationsdaten und/oder Kameradaten ermittelt werden.

Als weiteres konkretes Beispiel sei der Übergang vom Traffic Piloten zum Fahrerassistenzsystem an Baustellen genannt. In Baustellen werden durch die Verengung der Fahrspuren in Verbindung mit Schwerlastverkehr erhöhte Anforderungen an die Querführung gestellt. Werden diese vom Traffic Piloten nicht erfüllt, so fordert er den Fahrer beim Erkennen einer Baustelle dazu auf, das Lenkrad zu übernehmen. Der Fahrer wird dann durch das Fahrerassistenzsystem bei der Längs- und Querführung unterstützt. Eine Baustelle wird zumindest auf der Autobahn immer durch Verkehrsschilder angekündigt, welche über Kameras erfasst werden können.

Bisher wurde immer beschrieben, dass sich die Qualität der Sensordaten, die Fahraufgabe oder das Umfeld in Richtung von einem automatischen System zu einem assistierten System verschoben haben. Im umgekehrten Fall wird dann der Fahrer informiert, dass dieser von einem assistierten System zu einem automatischen System wechseln kann, wenn dies der Fahrer wünscht.

## Patentansprüche

1. Verfahren zur Steuerung und/oder Regelung eines Kraftfahrzeuges, mittels mindestens eines Fahrerassistenzsystems (FA 1-3) zur Unterstützung des Kraftfahrzeugführers und mindestens eines Systems (AS 1-3) zum automatischen Fahren, wobei unter einem System zum automatischen Fahren ein System verstanden wird, bei dem der Fahrer selbst keine Lenkmomente mehr aufbringen muss und das System selbständig die komplette Längs- und Querführung des Fahrzeugs übernimmt, wobei bei einem überwachten System zum automatischen Fahren der Fahrer die Hände auf das Lenkrad legen muss, ohne Lenkmomente zu generieren, wobei die Systeme (FA 1-3, AS 1-3) auf die Daten mindestens eines gemeinsamen Sensors (3-5) zugreifen, wobei in Abhängigkeit von der Fahraufgabe und dem Umfeld und der Qualität der Sensordaten (3-5) automatisch von einem System (FA 1-3, AS 1-3) auf das andere System umgeschaltet wird oder der Kraftfahrzeugführer über die Möglichkeit des Wechsels informiert wird, wobei die Fahraufgabe von der Fahrzeuggeschwindigkeit und/oder dem Abstand zu einem vorausfahrenden Kraftfahrzeug abhängig ist, wobei das System (AS 1-3) zum automatischen Fahren als unüberwachter und/oder überwachter Traffic Pilot und/oder als Stau Pilot und/oder als Kolonnen Pilot ausgebildet ist, wobei mindestens eine Umschaltung von einem System (AS 1-3) zum automatischen Fahren auf ein Fahrerassistenzsystem (FA 1-3) erfolgt.

2. Verfahren nach Anspruch 1, **dadurch gekennzeichnet, dass** das Umfeld mindestens in Stadt und Autobahn unterteilt wird.

3. Vorrichtung (1) zur Steuerung und/oder Regelung eines Kraftfahrzeuges, umfassend mindestens ein Fahrerassistenzsystem (FA 1-3) zur Unterstützung des Kraftfahrzeugführers und mindestens ein System (AS 1-3) zum automatischen Fahren, wobei unter einem System zum automatischen Fahren ein System verstanden wird, bei dem der Fahrer selbst keine Lenkmomente mehr aufbringen muss und das System selbständig die komplette Längs- und Querführung des Fahrzeugs übernimmt, wobei bei einem überwachten System zum automatischen Fahren der Fahrer die Hände auf das Lenkrad legen muss, ohne Lenkmomente zu generieren, wobei die Systeme (FA 1-3, AS 1-3) auf die Daten mindestens eines gemeinsamen Sensors (3-5) zugreifen, wobei in Abhängigkeit von der Fahraufgabe und dem Umfeld und der Qualität der Sensordaten (3-5) automatisch von einem System (FA 1-3, AS 1-3) auf das andere System umgeschaltet wird oder der Kraftfahrzeugführer über die Möglichkeit des Wechsels informiert wird, wobei die Fahraufgabe von der Fahrzeuggeschwindigkeit und/oder dem Abstand zu einem vorausfahrenden Kraftfahrzeug abhängig ist, wobei das System (AS 1-3) zum automatischen Fahren als Traffic Pilot und/oder als Stau Pilot und/oder als Kolonnen Pilot ausgebildet ist, wobei mindestens eine Umschaltung von einem System (AS 1-3) zum automatischen Fahren auf ein Fahrerassistenzsystem (FA 1-3) erfolgt.

4. Vorrichtung nach Anspruch 3, **dadurch gekennzeichnet, dass** die Vorrichtung derart ausgebildet ist, dass diese zwischen Stadt und Autobahn unterscheidet.

## Claims

1. Method for performing open-loop and/or closed-loop control of a motor vehicle, by means of at least one driver assistance system (FA 1-3) for assisting the driver of the motor vehicle and at least one system (AS 1-3) for automatic driving, wherein a system for automatic driving is understood to be a system in which the driver himself no longer has to apply any steering torques and the system automatically performs the entire longitudinal guidance and transverse guidance of the vehicle, wherein in the case of a monitored system for automatic driving the driver has to place his hands on the steering wheel without generating steering torques, wherein the systems (FA 1-3, AS 1-3) access the data of at least one common sensor (3-5), wherein switching over from one system (FA 1-3, AS 1-3) to the other system takes place automatically, or the driver of the motor vehicle is informed about the possibility of the changeover, as a function of the driving task and the surroundings and the quality of the sensor data (3-5), wherein the driving task is dependent on the vehicle speed and/or the distance from a motor vehicle travelling ahead, wherein the system (AS 1-3) for automatic driving is embodied as an unmonitored and/or monitored traffic pilot and/or as a traffic congestion pilot and/or as a backed-up traffic pilot, wherein at least one switching over operation from a system (AS 1-3) for automatic driving to a driver assistance system (FA 1-3) takes place.

2. Method according to Claim 1, **characterized in that** the surroundings are divided at least into the town and the motorway.

3. Device (1) for performing open-loop and/or closed-loop control of a motor vehicle, comprising at least one driver assistance system (FA 1-3) for assisting the driver of the motor vehicle and at least one system (AS 1-3) for automatic driving, wherein a system for automatic driving is understood to be a system in which the driver himself no longer has to apply any steering torques and the system automatically performs the entire longitudinal guidance and transverse guidance of the vehicle, wherein in the case of a monitored system for automatic driving the driver has to place his hands on the steering wheel without generating steering torques, wherein the systems (FA 1-3, AS 1-3) access the data of at least one common sensor (3-5), wherein switching over from one system (FA 1-3, AS 1-3) to the other system takes place automatically, or the driver of the motor vehicle is informed about the possibility of the changeover, as a function of the driving task and the surroundings and the quality of the sensor data (3-5), wherein the driving task is dependent on the vehicle speed and/or on the distance from a motor vehicle travelling ahead, wherein the system (AS 1-3) for automatic driving is embodied as a traffic pilot and/or as a traffic congestion pilot and/or as a backed-up traffic pilot, wherein at least one switching over operation from a system (AS 1-3) for automatic driving to a driver assistance system (FA 1-3) takes place.

4. Device according to Claim 3, **characterized in that** the device is embodied in such a way that it differentiates between town and motorway.

## Revendications

1. Procédé destiné à la commande et/ou à la régulation d'un véhicule à moteur, au moyen d'au moins un système d'assistance à la conduite (FA 1 à 3) destiné à l'assistance du conducteur du véhicule à moteur, ainsi que d'au moins un système (AS 1 à 3) destiné à la conduite automatique ;
selon lequel un système est compris dans un système destiné à la conduite automatique, pour lequel le conducteur ne doit lui-même réaliser aucun couple de braquage et pour lequel le système prend en charge de manière autonome le guidage longitudinal et transversal complet du véhicule ;
selon lequel le conducteur, dans le cas d'un système sous surveillance, doit poser les mains sur le volant de direction en vue de la conduite automatique, sans générer de couple de braquage ;
selon lequel les systèmes (FA 1 à 3, AS 1 à 3) ont recours aux données d'au moins un capteur (3 à 5) commun ;
selon lequel, en fonction de la tâche de la conduite et de l'environnement, ainsi que de la qualité des données du capteur (3 à 5), le système commute automatiquement d'un système (FA 1 à 3, AS 1 à 3) à l'autre système, ou le conducteur du véhicule à moteur est informé de la possibilité de changer de système ;
selon lequel la tâche de la conduite est fonction de la vitesse du véhicule et/ou de la distance par rapport à un véhicule à moteur qui précède ;
selon lequel le système (AS 1 à 3) est conçu en vue de la conduite automatique sous la forme d'un pilote de route (« Traffic Pilot ») non surveillé ou sous surveillance et/ou sous la forme d'un pilote pour embouteillage et/ou sous la forme d'un pilote en colonnes ;
selon lequel au moins une commutation a lieu depuis un système (AS 1 à 3) destiné à la conduite automatique vers un système d'assistance à la conduite (FA 1 à 3).

2. Procédé selon la revendication 1, **caractérisé en ce que** l'environnement est au moins réparti en une conduite en ville et une conduite sur autoroute.

3. Dispositif (1) destiné à la commande et/ou à la régulation d'un véhicule à moteur, comprenant au moins un système d'assistance à la conduite (FA 1 à 3) destiné à l'assistance du conducteur du véhicule à moteur, ainsi qu'au moins un système (AS 1 à 3) destiné à la conduite automatique ;
selon lequel un système est compris dans un système destiné à la conduite automatique, pour lequel le conducteur ne doit lui-même réaliser aucun couple de braquage et pour lequel le système prend en charge de manière autonome le guidage longitudinal et transversal complet du véhicule ;
selon lequel le conducteur, dans le cas d'un système sous surveillance, doit poser les mains sur le volant de direction en vue de la conduite automatique, sans générer de couple de braquage ;
selon lequel les systèmes (FA 1 à 3, AS 1 à 3) ont recours aux données d'au moins un capteur (3 à 5) commun ;
selon lequel, en fonction de la tâche de la conduite et de l'environnement, ainsi que de la qualité des données du capteur (3 à 5), le système commute automatiquement d'un système (FA 1 à 3, AS 1 à 3) à l'autre système, ou le conducteur du véhicule à moteur est informé de la possibilité de changer de système ;
selon lequel la tâche de la conduite est fonction de la vitesse du véhicule et/ou de la distance par rapport à un véhicule à moteur qui précède ;
selon lequel le système (AS 1 à 3) est conçu en vue de la conduite automatique sous la forme d'un pilote de route (« Traffic Pilot ») et/ou sous la forme d'un pilote pour embouteillage et/ou sous la forme d'un pilote en colonnes ;
selon lequel au moins une commutation a lieu depuis un système (AS 1 à 3) destiné à la conduite automatique vers un système d'assistance à la conduite (FA 1 à 3).

4. Dispositif selon la revendication 3, **caractérisé en ce que** le dispositif est conçu de telle sorte que celui-ci sait faire la distinction entre la conduite en ville et la conduite sur autoroute.
